# EUROPEAN PATENT APPLICATION

(11) **EP 4 407 830 A1**
(43) Date of publication of application: **31.07.2024**
(21) Application number: 23219039.7
(22) Date of filing: 21.12.2023
(51) Int. Cl.: H02J 7/00, B66F 9/065, B66F 9/075, H02J 7/34

(54) **PORTABLE CHARGER DEVICE FOR TELEHANDLER**

(30) Priority: 23.12.2022 IT 202200026715
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

Described is a telehandler (1) equipped with an electric propulsion motor and a plurality of seats (100, 100', 100") designed to receive power supply means (200, 200'); wherein an electric battery (200) is provided for powering the motor, designed to be received in one of the seats (100, 100', 100"); and wherein a portable battery charger device (200') is provided for charging electric batteries (200) for telehandlers, designed to be received in a removable fashion in one of the seats (100, 100', 100").

## Description

This invention relates to a telehandler equipped with a portable battery charger device.

There are prior art electric telehandlers (that is to say, telescopic handlers), equipped with an electric motor, powered by one or more batteries, in place of the traditional internal combustion engine, which have the advantage of not diffusing exhaust gas in the environments in which they work.

The environmental regulations of many countries require the use of electric telehandlers instead of those with a fossil fuel power supply if works are to be performed in closed environments, such as industrial sheds, or in zones of residential centres where restrictions apply to the traffic and to the type of vehicles allowed to circulate, such as town centres.

However, currently, the use of the prior art electric telehandlers has some limits linked to the operational autonomy and the recharging times.

In fact, on the one hand, the use of the telehandler, or a fleet of telehandlers, can be requested at more than one work site and, at the end of the planned operations, the vehicle must be returned to its yard; in these circumstances, the residual autonomy of the batteries may not be sufficient to move the telehandler(s) to their destination.

There are often no columns for rapid recharging, at or close to the work sites, and sometimes it is not even possible to use the electricity network with alternating current for the purposes of recharging the batteries of the machine.

On the other hand, even in cases in which recharging by means of an electricity network is possible, the recharging times are quite long, which has a negative effect on productivity, especially when more than one telehandler is be charged.

The technical purpose which forms the basis of the invention is to provide a telehandler which overcomes the limitations of the prior art.

The technical purpose specified is achieved by an electric telehandler equipped with a portable battery charger device made according to the appended claims.

Further characteristics and advantages of the present invention will become more apparent in the non-limiting description of a preferred but non-exclusive embodiment of the proposed telehandler, as illustrated in the accompanying drawings, in which:
- Figure 1 is a side view of a telehandler according to the invention;
- Figures 2 to 4 are axonometric views of the telehandler of Figure 1, in which the cab is not shown;
- Figure 5 is an axonometric view of a battery charger device according to the invention which charges a battery for powering the telehandler of the preceding drawings; and
- Figures 6, 7 and 8 show an electrical system of the telehandler according to the invention, in three possible use configurations.

With reference to the first drawing, the numeral 1 denotes in its entirety an electrically powered telehandler according to the invention.

The telehandler 1 proposed is equipped with a frame 11, or "carriage", movable on wheels and may be either fixed or rotary, that is to say, it can mount the cab and the operating arm directly on the carriage or, as in the case illustrated, may be equipped with a platform, or "turret" 11, mounted rotatably on the carriage 11, which supports the cab and operating arm.

The telehandler 1 according to the invention may comprise at least one electric traction motor, for example positioned at one of the axles and an electric motor for driving the hydraulic pump which powers the movement cylinders of the arm and, if necessary, the motor-driven rack of the tower.

According to an important aspect of the invention, the telehandler is equipped with a plurality of seats 100, 100', 100", designed to receive power supply means 200, 200', the latter being able to be: at least one electric battery 200 for powering said motor, designed to be received in a removable fashion in at least one of said seats 100, 100', 100"; and at least one portable battery charger device 200' for charging electric batteries for telehandlers, designed to be received in a received in a fashion in at least one of said seats.

According to one particular embodiment of the invention, the power supply means may also include an electricity generator apparatus consisting, for example, of a so-called "diesel-electric generator" or a fuel cell.

The battery charger device 200' is preferably designed for rapid charging with direct current and may be designed to be placed on the ground or on another support, so as to be able to charge a battery 200 both when it is located in one of the seats of the telehandler and when it is placed on the ground.

The battery charger device 200' is designed to allow a rapid recharging autonomously. In practice, the portable rapid charger 200' includes inside it all the components which make it able, once connected to the national electricity network, to perform a rapid direct current recharging of the battery, operating as a rapid recharging station (or recharging "tower"), with the difference of being portable.

The seats 100, 100', 100" which can receive on board the telehandler 1 the power supply means 200, 200' may be located in an inner position or on an outer surface of the telehandler 1; in detail, the seats may be made inside the carriage 11 or on the carriage 11.

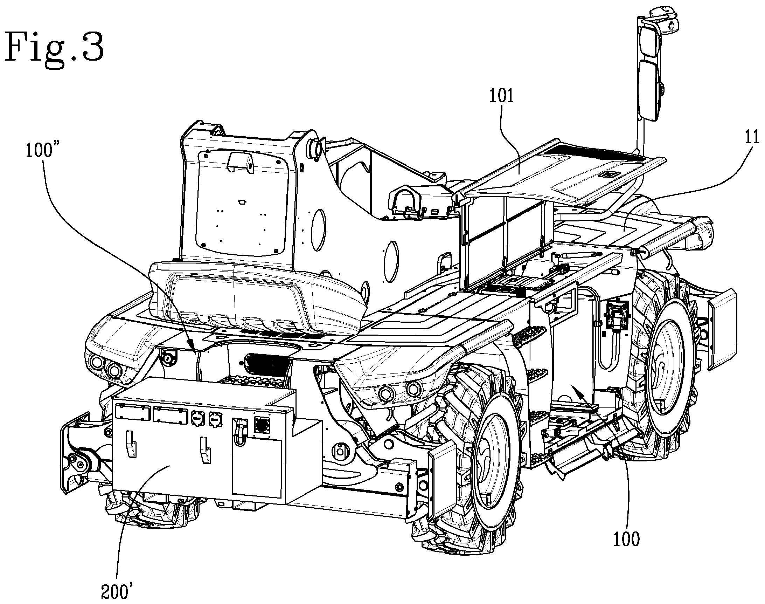

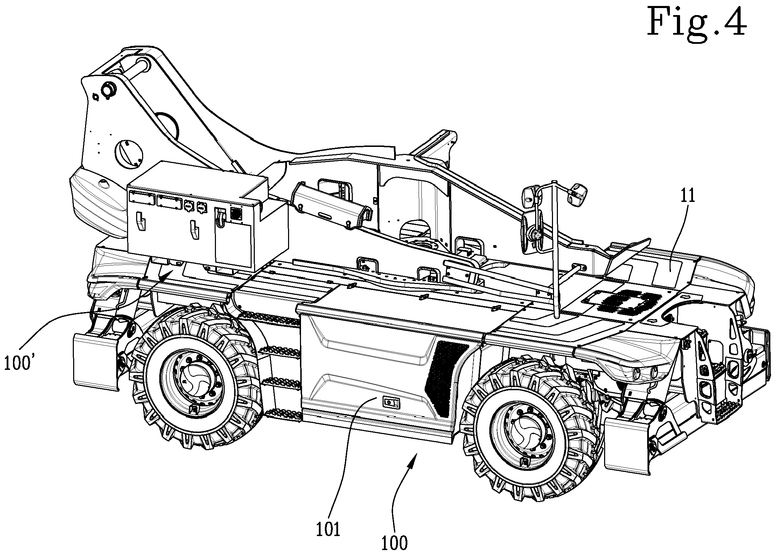

For example, as shown in Figures 3 and 4, a seat may be provided on the rear of the carriage 11 and/or a seat may be provided on a side of the carriage. In this case, the seat may be equipped with coupling means for removably receiving the power supply means, for example the battery charger device 200'.

Although, in principle, embodiments are possible wherein the same seat 100, 100', 100" receives several power supply means, for example two batteries or a battery 200 and a battery charger device 200', reference will be made below to the particular case in which each seat 100, 100', 100" may house a single power supply device, that is, only a battery 200 or only a battery charger device 200' or even a single electricity generator apparatus, as defined above.

Preferably, one or more of said seats are formed in respective containment compartments 100, which are designed for housing said power supply means and are equipped with an access opening to allow a user to insert or extract at least one of the power supply means.

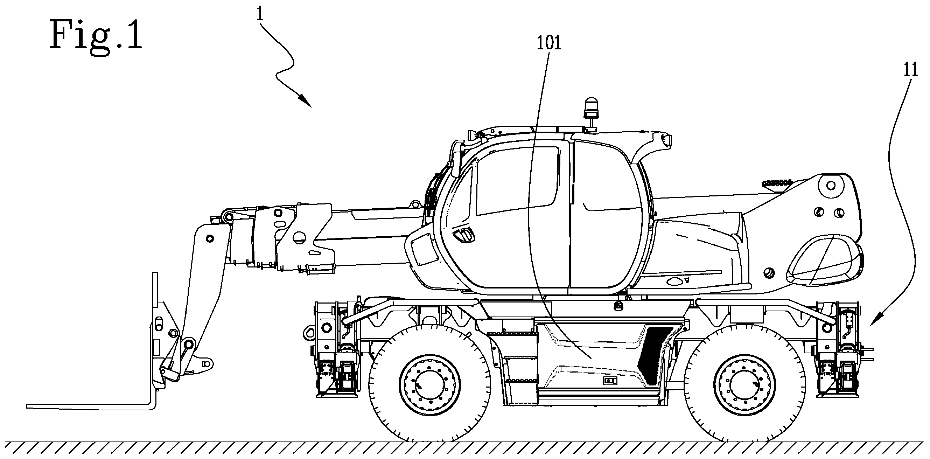

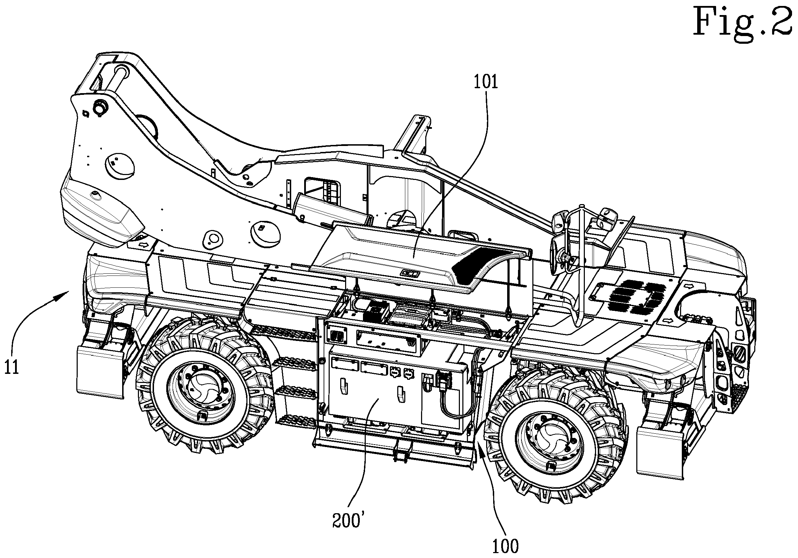

More specifically, the carriage 11 of the telehandler 1 may include at least one containment compartment 100, accessible from the outside, for receiving and containing and allowing the extraction of an electric battery 200 or a battery charger 200' (see Figures 1 - 4).

For example, the carriage 11 may define two lateral compartments 100, made in its opposite lateral portions, right and left, accessible from opposite sides.

In still more detail, each compartment 100 is preferably designed to house alternately a battery 200 and a battery charger device 200'.

The compartment 100, or each compartment 100, is equipped with an opening giving access to the internal containment space of the battery 200, to allow replacement of the battery 200 or of the battery charger 200' by inserting and extracting.

Preferably, the access opening of the compartment 100 is positioned on a relative side of the carriage 11, facing outwards, thereby allowing an insertion and an extraction of the battery 200 or of the battery charger along a horizontal direction.

The opening is equipped with a door 101, or "hood", to allow access to the compartment 100 from the outside; the door 101 may be of the tilting type and equipped with a lock.

For this reason, both the batteries 200 and the battery charger device 200', as well as the above-mentioned electricity apparatus, if present, are designed and shaped in such a way that they can be inserted in the compartments 100, to be housed in them and then extracted, so as to remove them from the telehandler 1.

Preferably, the batteries 200 and the battery charger device 200' substantially have the same dimensions in length, width and thickness and can also have a substantially prismatic shape, for example that of a parallelepiped. Preferably, the same applies to the electricity generator apparatus.

It should be noted that, preferably, one of the compartments 100 of the carriage 11 is designed to always house a battery 200 designed for powering the motors whilst another battery 200 or one of the other power supply means can be positioned in the other compartment 100, or in the other seats 100', 100". For this reason, the telehandler 1 according to the invention is also configured as a transport vehicle for power supply means, such as batteries 200, battery charger devices 200', diesel-electric generators, fuel cells or the like.

Before describing further aspects of the invention, a possible operation of the invention is described below.

The telehandler 1 according to the invention can transport on board a battery 200 and a battery charger device 200', as well as, as mentioned, the electricity generator apparatus.

The battery 200 powers the above-mentioned electric motors and the battery charger 200' may be used to power the battery 200 itself, in ways explained below.

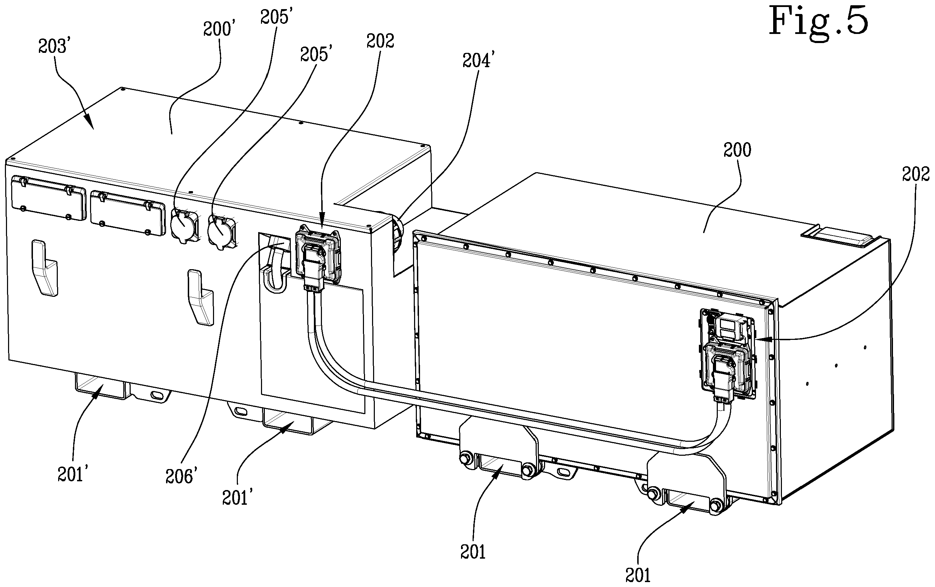

Moreover, the battery charger 200' may be unloaded from the telehandler 1 and placed, for example, on the ground. In this position, it may be used for the rapid charging of a battery 200 outside the machine 1, which may, for example, also be placed on the ground (see Figure 5) or of a battery 200 located on board an operating machine with (at least partly) electric propulsion, such as, for example, another electric telehandler.

After that, the battery charger 200' may be located again on the first telehandler or, if necessary, another telehandler made in accordance with the invention. Moreover, depending on the requirements of the users, a battery 200 which is on the telehandler 1 may be replaced with a battery charger 200' or vice versa.

In this way, there is not only a rapid recharging of the batteries 200 which are used to power the telehandler 1 or other electrical operating machines but the maximum flexibility of use is achieved both for the single telehandler and for a fleet.

In general terms, the telehandler 1 is equipped with one or more of the following power supply configurations:
- a first configuration wherein one or more batteries 200 which power the motor are positioned in the above-mentioned seats 100, 100', 100";
- a second configuration wherein in the respective seats 100, 100', 100" there is a battery 200 for powering the motor and a battery charger device 200' used for charging the battery 200;
- a third configuration, wherein there is the battery charger device 200' in a seat 100, 100', 100" for the purposes of its transport;
- a fourth power supply configuration, wherein the battery charger device 200' is installed outside the telehandler 1 and is used to charge a battery 200, whether it is separate from or on board an operating machine.

Preferably, the battery 200 comprises a connector 202 for dispensing the current (possibly only one), which can be connected to a respective single transmission cable (possibly only one) positioned in the compartment 100, connected to the electrical system of the telehandler 1, which is also connected to the above-mentioned electric motors, for the purposes of their power supply. Instead of the cable, there may be any transmission element suitable for the purpose.

More in detail, the battery 200 comprises a connection apparatus which includes the above-mentioned connector 202 and the relative control logic and is set up both for the transmission of current and signals by means of the communication and management system of the devices inside the telehandler, for example of the CAN-bus type, which is connected to the control unit.

According to a preferred aspect of the invention, the battery charger device 200' according to the invention is equipped with the same connection apparatus and therefore with the same connector 202 as the battery 200 and can therefore be connected directly to the battery 200 for the purposes of rapid recharging of the battery (see Figure 5). This aspect is explained in more detail in the following paragraphs.

According to an embodiment illustrated in Figure 5, the battery charger device 200' includes a housing 203' which encloses the electronic components designed to allow the recharging of the batteries 200. The battery charger device 200' comprises firstly an socket 204' for connection to the national electricity network and can comprise one or more of the following sockets: type 2 socket 205', set up for charging with alternating current, type CCS combo 2 socket 206', set up for charging with direct current and replacement socket 202 which is used alternately either for directly charging a battery outside the telehandler, for example placed on the ground, or to take the place of the on-board charger.

More specifically, preferably, the replacement socket is the connector 202 of the above-mentioned portable charger 202' which is preferably identical to the socket or connector of the battery or batteries which are used by the telehandler. Moreover, by connecting the replacement socket 202 to the above-mentioned transmission cable, it is possible to recharge the battery on the telehandler 1 exactly as if the rapid charger 200' were an on-board charger, but with the possibility of using a greater charging power. According to the embodiment illustrated, the portable charger 200' comprises two type 2 sockets 205', designed for connection with the electrical system of the telehandler 1, which allow a recharging with a first maximum power which preferably is equal to 22 kW or is around this value. Moreover, the portable charger 200' comprises a CCS combo 2 socket 204', designed for connection with the electrical system of the telehandler 1, which allows a recharging with a second maximum power greater than the first and preferably equal to 60 kW or around this value. The maximum power of the recharging of the replacement socket 202' may be, for example, 60 kW or around this value.

The portable rapid charger 202' may include an internal processing unit configured for managing the recharging. More in detail, the processing unit can include a distribution module configured for distributing a maximum power which can be delivered to a plurality of said sockets 202, 205', 206'. More specifically, according to a version of the invention, interface means are provided, for example comprising a touchscreen or the like, configured to allow a user to select the sockets from which it is possible to have an energy regulation and configured preferably to allow the user to select a priority for dispensing the energy from the sockets. In the latter case, the processing unit also includes a priority module configured for distributing the energy dispensed on the basis of the selection of priorities of the user. More precisely, this distribution may be variable on the basis of the maximum power available.

Still more in detail, the overall internal electrical system of the telehandler 1 includes all the usual electrical and electronic devices for operating motors and other user devices, such as inverters positioned upstream of the motors, the power supply distribution unit downstream of the above-mentioned transmission cable, chargers for charging the batteries 200 by means of an external socket and the various circuits for lighting the flashing lights and reflectors, internal lights, etc.

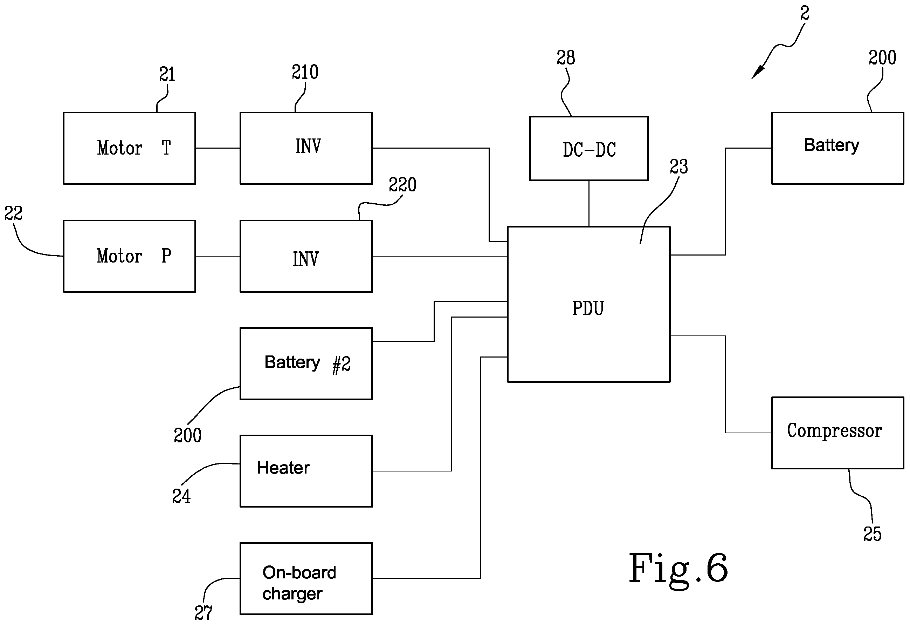

More specifically, the above-mentioned overall system may comprise a high voltage system 2, shown in Figures 6 to 8, which connects firstly one or more electric motors 21, 22, for example a drive motor 21, connected to the transmission and, if necessary, a different electric motor 22 which may be connected to the pump of the hydraulic system of the machine 1. Preferably, the high voltage system 2 includes a power distribution unit 23 ("PDU") which connects the battery 200 to the motor (or to the motors) and other electronic devices powered by the system. More in detail, the system 2 connects the distribution unit 23 to the inverters 210, 220 which drive the motors 21, 22.

The high voltage system 2 can include one or more of the following electronic devices: a climate control system of the cab of the telehandler 1, that is, the heater 24 and the compressor for the air conditioning 25, an on-board electric charger 27, for charging the battery 200 (or the batteries) using the national electricity network (or other similar sources). The above list is not necessarily exhaustive. Preferably, the high voltage system 2 of the telehandler 1 is connected to all the above-mentioned electronic devices. In still more detail, the various above-mentioned electronic devices are connected directly to the above-mentioned distribution unit 23. Further, the overall electrical system also comprises a low voltage system, connected to the high voltage system by means of a DC-DC converter 28 which may be connected to the distribution unit and is used to power the lights, the dashboard, the start-up, the wiper blades and various accessories inside or outside the cab.

Figures 6, 7 and 8 show the use of the high voltage electrical system 2 in three configurations of use.

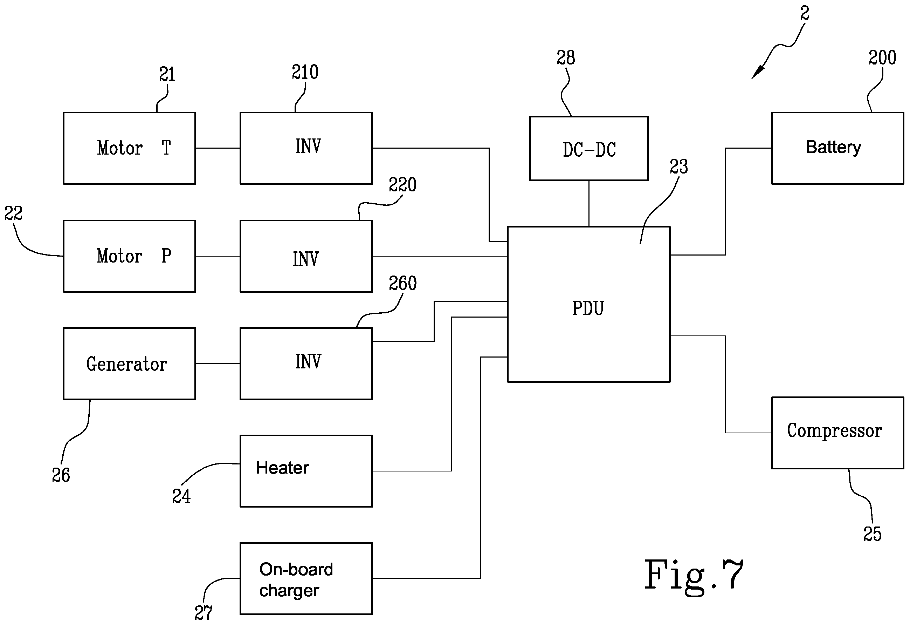

According to the first configuration of use shown in Figure 6, a second battery 200 is connected to the system, connected directly to the distribution unit 23. In this case, the second battery 200 is used to power the various powered electronic devices, such as the heater 24 and the compressor for the air conditioning 25 and it is also used to power the electric motors 21, 22, alternatively or together with the other battery 200 present in the telehandler 1. The two batteries 200 can be charged by connecting the on-board charger 27 to the national electricity network. According to the second configuration of use shown in Figure 7, the generator 25 is connected to the high voltage electrical system 2 and is connected to the distribution unit 23 by means of a respective inverter 260. According to this configuration, the battery 200 on board the machine 1 can be powered by the generator 26.

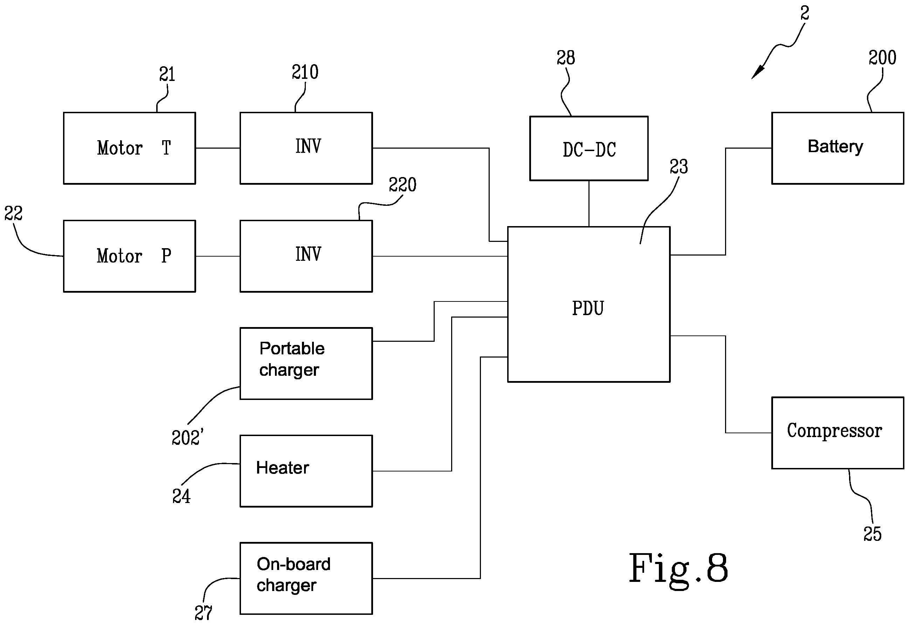

According to the third configuration of use, shown in Figure 8, the battery charger device 200' is connected to the high voltage system 2, connected directly to the distribution unit 23, so as to be able to charge the battery 200 which is on board. Preferably, the batteries 200, the battery charger devices 200' and the electricity generator apparatuses according to the invention are equipped, at the lower side, with insertion seats 201, 201' for receiving the prongs of a loading fork, to allow the movement by means of a forklift truck. In other words, the battery 200, the battery charger 200' and the electricity generator apparatus may have a bottom which defines or consists of or is fixed to a base shaped like a pallet, for the purpose of inserting forks and the movement with a customary forklift truck.

In this case, the picking up or replacing occurs by opening the door 101, placing forks beneath the battery 200 or the battery charger device 200', after electrical disconnection, and extracting it from the compartment 100; after that, forks can be placed beneath another battery 200 or another device 200', moving it to the height of the opening and then inserting it. The operations can be performed with the electricity generator in place of one of the other two power supply means.

The invention is also configured as a method for managing the power supply of a telehandler, which includes the following steps:
- providing a telehandler 1 equipped with at least one electric propulsion motor; the telehandler may be like that of the invention, described above.
- providing at least one electric battery 200;
- providing at least one portable battery charger device 200', which can be transported on board the telehandler; and
- charging the electric battery 200 using the battery charger device 200'.
the method according to the invention may include as steps activities corresponding to the functions, optional or not, of the telehandler 1 described above and also make use of the various components, optional and not.

In detail, the battery 200 can be transported on the telehandler 1 and, in this case, the battery charger device 200' charges the battery 200 whilst they are both transported on the telehandler.

According to a different case, the battery charger device 200' is placed on the ground or on a support whilst charging the battery 200, the latter being in turn placed on the ground or on a support or being positioned on an operating machine, such as, for example, a telehandler, merely as a support.

More specifically, according to this operating mode, the battery 200 is charged by the portable charger 200' when it is disconnected from the electrical system of the telehandler 1.

Further, the battery charger device may be positioned on the telehandler whilst charging a battery 200 which is positioned on a different operating machine, such as, for example, a telehandler.

## Claims

1. A telehandler (1) equipped with at least one electric propulsion motor and a plurality of seats (100, 100', 100") designed for receiving power supply means (200, 200');
wherein at least one electric battery (200) is provided for powering said motor, designed to be received in one of said seats (100, 100', 100"); and
wherein at least one portable battery charger device (200') is provided for charging electric batteries (200) for telehandlers, designed to be received in a removable fashion in one of said seats (100, 100', 100").

2. The telehandler according to the preceding claim, wherein the portable battery charger device (200') is designed to perform a rapid recharging for the batteries autonomously.

3. The telehandler according to any preceding claim, comprising a socket (204') for connection to a national electricity network and comprising one or more of the following sockets: socket for charging with alternating current (205'), designed for connection with an electrical system (2) of the telehandler, socket for charging with direct current (206'), designed for connection with an electrical system (2) of the telehandler and replacement socket (202) designed to directly charge a battery (200).

4. The telehandler according to any preceding claim, wherein the portable battery charger device (200') is designed to be placed on the ground or on another support and is designed to charge a battery (200) both when it is located in one of the seats of the telehandler and when it is placed.

5. The telehandler according to any preceding claim is equipped at least with the following power supply configurations:
a first configuration wherein one or more batteries (200) which power the motor are positioned in the above-mentioned seats (100, 100', 100");
a second configuration wherein in the seats there is a battery (200) for powering the motor and a battery charger device (200') used for charging the battery (200).

6. The telehandler according to the preceding claim, provided at least also with a third configuration, wherein there is the battery charger device (200') in a seat (100, 100', 100") for the purposes of its transport.

7. The telehandler according to claim 3 or 4, provided at least also with a fourth power supply configuration, wherein the battery charger device (200') is placed outside the telehandler and is used for charging a battery (200).

8. The telehandler according to any preceding claim, wherein one or more of said seats are defined by respective containment compartments (100), which are designed for housing said power supply means (200, 200') and are equipped with an access opening to allow a user to insert or extract at least one of the power supply means.

9. The telehandler according to the preceding claim, wherein said portable battery charger device (200') is designed to be inserted in, housed in and extracted from at least one of said compartments (100).

10. The telehandler according to the preceding claim, wherein at least one compartment (100) is designed for housing alternately a battery (200) and a battery charger device (200').

11. The telehandler according to any preceding claim, comprising a high voltage electrical system (2) which connects one or more electric motors (21, 22) and which includes an on-board electrical charger (27) designed to charge a battery (200) on the telehandler by a connection to a national electricity network.

12. The telehandler (1) according to any preceding claim, wherein the battery charger device (200) is equipped, at a lower side, with insertion seats (201) for receiving the prongs of a loading fork, to allow the movement by means of a forklift truck.

13. The telehandler according to any preceding claim, wherein said power supply means comprise an electricity generating apparatus positioned in one of said seats (100, 100', 100").

14. A method for controlling the power supply of a telehandler, comprising the following steps:
providing a telehandler (1) equipped with at least one electric propulsion motor;
providing at least one electric battery (200);
providing at least one portable battery charger device (200'), which can be transported on board the telehandler; and
charging the electric battery (200) using the battery charger device (200').

15. The method according to the preceding claim, wherein the battery (200) can be transported on the telehandler (1) and the battery charger device (200') charges the battery (200) whilst they are both transported on the telehandler.
